# EUROPEAN PATENT APPLICATION

(11) **EP 2 252 054 A1**
(43) Date of publication of application: **17.11.2010**
(21) Application number: 09721199.9
(22) Date of filing: 05.03.2009
(51) Int. Cl.: H04N 7/173

(54) **METHOD, SYSTEM AND EQUIPMENT FOR CONTROLLING AN INTERACTIVE VIDEO SERVICE**

(30) Priority: 21.03.2008 CN 200810084418
(71) Applicant: Huawei Technologies Co., Ltd., Longgang District, Shenzhen Guangdong 518129 (CN)
(72) Inventor: LIAO, Yongxiong, Shenzhen Guangdong 518129 (CN); JI, Xiangyang, Shenzhen Guangdong 518129 (CN); LUO, Wei, Shenzhen Guangdong 518129 (CN); JIA, Zengli, Shenzhen Guangdong 518129 (CN)
(74) Representative: Kreuz, Georg Maria
(86) International application number: PCT/CN2009/070648
(87) International publication number: WO 2009/115006

(57) **Abstract**

A method for controlling an interactive video service is provided. The method includes the following steps: receiving a control request sent by a terminal device; obtaining an identifier of a Set Top Box (STB) device corresponding to the terminal device; and controlling a media stream of the STB device corresponding to the identifier of the STB device according to the control request. A system and a device for controlling an interactive video service are also provided. Thus, through the interaction between the terminal device and a Video On Demand (VOD) system, the program guide browsing and on-demand control for the interactive video service are realized for STB users. Therefore, without significantly modifying the broadcast and television network, the problem that some STB users cannot use an interactive video service currently is solved. In addition, the STB users can perform operations such as program guide browsing, on-demand initiating, and on-demand session control on handset devices, so that desirable service experience is achieved.

## Description

The application claims the benefit of priority to China Patent Application No. 200810084418.X, filed on March 21, 2008, and entitled "METHOD, SYSTEM, AND DEVICE FOR CONTROLLING INTERACTIVE VIDEO SERVICE", which is incorporated herein by reference in its entirety.

### FIELD OF THE TECHNOLOGY

The present invention relates to the field of network technology, and more particularly to a method, a system, and a device for controlling an interactive video service.

### BACKGROUND OF THE INVENTION

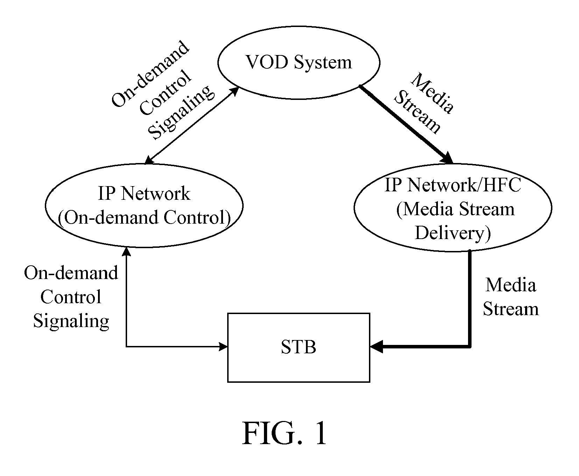

FIG. 1 shows the principle for realizing the Video On Demand (VOD) technology in the conventional art. A user operates a terminal device such as a personal computer (PC) to request a VOD server for streaming media playback over an Internet Protocol (IP) network. After receiving the request, the VOD server plays a media stream, and transfers the media stream to the terminal device such as the PC through an IP or Hybrid Fiber Coaxial (HFC) network device. The terminal device decodes the media stream to obtain audio and video, and plays the audio and video on a display device connected to a Set Top Box (STB), such as a television, and on an audio device such as an audio system or a built-in audio system of the television.

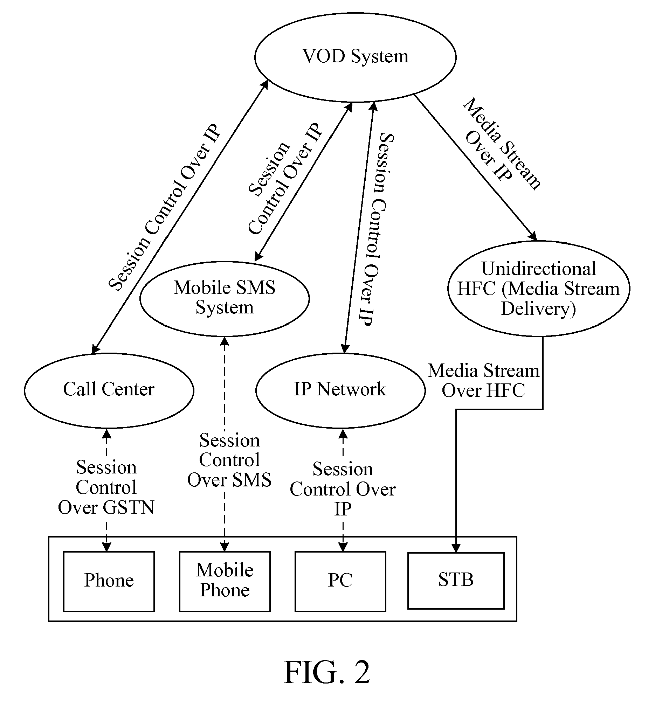

However, currently, some STBs are unidirectional ones, which are not provided with IP network ports, and can receive media streams sent by a network-side device unidirectionally. Therefore, after a VOD network is constructed, how to enable users of unidirectional STBs to use the VOD service becomes an urgent problem to be solved. In the conventional art, methods for enabling users of unidirectional STBs to use the VOD through a short message service (SMS), telephone, or PC browser have been proposed. Specifically, the user of a unidirectional STB interacts with a VOD system through the SMS, telephone, or PC browser to initiate an on-demand request, and controls the VOD system to deliver a media stream to the STB of the user over the IP or HFC network. As shown in FIG. 2, the basic idea of the on-demand method for the unidirectional STB is described as follows. An on-demand tool, such as a mobile phone, telephone, or PC browser, other than an STB is adopted to interact with the VOD system to initiate the on-demand request; the VOD system identifies the STB to which a code stream should be sent according to preset binding relationships between on-demand tools and STBs, and sends a generated on-demand notification to a specified STB over a unidirectional HFC network; and after receiving the notification, the STB switches to a specific broadcast channel to receive the demanded code stream.

The conventional art has at least the following problems:

In an on-demand mode through the SMS or telephone, the interactive browsing and acquisition of an Electronic Program Guide (EPG) cannot be realized, trick mode operations such as fast forward, fast rewind, and pause are not supported, and Time-Shift Television (TSTV) and Television on Demand (TVOD) are not supported either. In an on-demand mode through the PC, the service experience is not desirable, and the on-demand mode is inconsistent with the use habits of users, so that operations are inconvenient, and the user experience is rather poor.

### SUMMARY OF THE INVENTION

Accordingly, the present invention is directed to a method, a system, and a device for controlling an interactive video service, which enable an STB user to control the interactive video service.

To achieve the above objectives, in an embodiment, the present invention provides a method for controlling an interactive video service. The method includes the following steps.

A control request sent by a terminal device is received.

An identifier of an STB device corresponding to the terminal device is obtained.

A media stream of the STB device corresponding to the identifier of the STB device is controlled according to the control request.

In an embodiment, the present invention further provides a system for controlling an interactive video service. The system includes a VOD system and an STB device.

The VOD system is adapted to receive a control request sent by a terminal device, obtain an identifier of an STB device corresponding to the terminal device, and control a media stream of the STB device according to the control request.

The STB device is adapted to receive the media stream sent by the VOD system according to the control request sent by the terminal device.

In an embodiment, the present invention further provides a terminal device, which is adapted to control an interactive video service. The terminal device includes a browsing unit and a session control unit.

The browsing unit is adapted to browse an EPG page provided by a VOD system on a network side, and send a control request to the VOD system by selecting a link on the EPG page.

The session control unit is adapted to send to the VOD system a control request for a media stream currently received by an STB device.

In an embodiment, the present invention further provides a VOD system. The VOD system includes an EPG server, an STB obtaining entity, and a VOD server.

The EPG server is adapted to receive a control request sent by a terminal device.

The STB obtaining entity is adapted to obtain an identifier of an STB device corresponding to the terminal device that sends the control request.

The VOD server is adapted to control a media stream of the STB device obtained by the STB obtaining entity according to the control request received by the EPG server.

In an embodiment, the present invention further provides an EPG server. The EPG server includes an EPG page generating unit and a receiving unit.

The EPG page generating unit is adapted to provide an EPG page based on a Hypertext Transfer Protocol (HTTP) mode or Wireless Application Protocol (WAP) mode to a terminal device, so that the terminal device sends a control request by selecting a link on the EPG page.

The receiving unit is adapted to receive the control request sent by the terminal device according to the EPG page provided by the EPG page generating unit.

Compared with the conventional art, the embodiments of the present invention have the following advantages.

Through the interaction between the terminal device and the VOD system, the present invention realizes program guide browsing and on-demand control for the interactive video service directed to STB users. Therefore, without significantly modifying the broadcast and television network, the present invention solves the problem that the STB users cannot use an interactive video service. In addition, the STB users can perform operations such as program guide browsing, on-demand initiating, and on-demand session control on handset devices, so that the present invention achieves desirable service experience.

### BRIEF DESCRIPTION OF THE DRAWINGS

FIG. 1 is a schematic diagram of a VOD system in the conventional art;
FIG. 2 is a schematic diagram of a unidirectional STB on-demand solution in the conventional art;
FIG. 3 is a schematic diagram of a system for controlling an interactive video service according to an embodiment of the present invention;
FIG. 4A and FIG. 4B are schematic structural views of a terminal device according to an embodiment of the present invention;
FIG. 5 is a flow chart of a method for controlling an interactive video service according to an embodiment of the present invention; and
FIG. 6 is a signaling flow chart for controlling an interactive video service according to an embodiment of the present invention.

### DETAILED DESCRIPTION OF THE EMBODIMENTS

Specific implementations of the present invention are described in detail as follows with reference to the accompanying drawings and the embodiments.

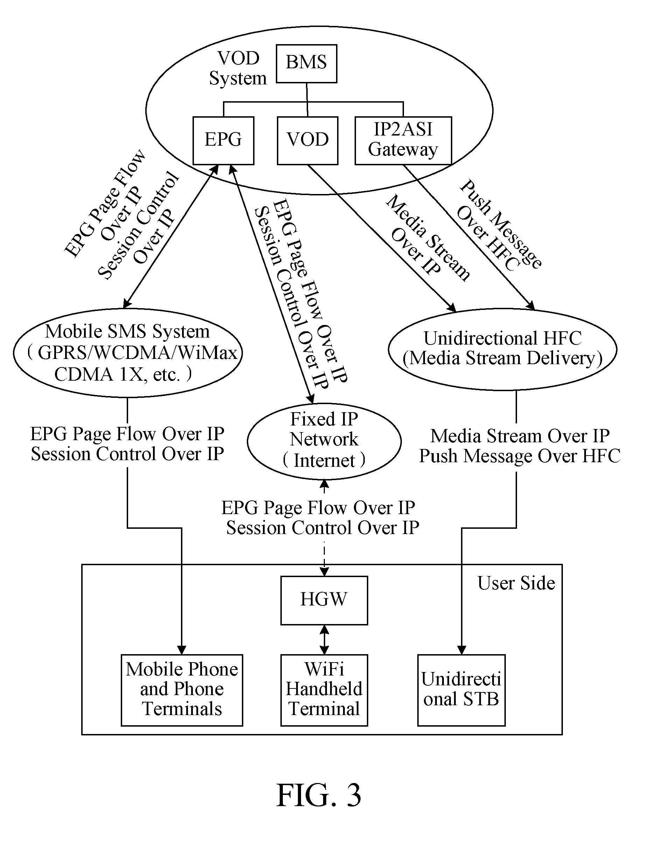

In an embodiment, the present invention provides a system for controlling an interactive video service. FIG. 3 is a schematic structural view of the system. As shown in FIG. 3, the structure of the system is described as follows.

### (1) VOD system

The VOD system is adapted to provide interactive video management and playback functions. The VOD system includes a VOD server, an interactive video service middleware, such as Business Management System (BMS), an EPG server, an IP2ASI gateway, and a charging system, which are separately described in the following.

BMS: The BMS is an interactive video service middleware, which realizes the interactive video service logic such as VOD, TVOD, Network Personal Video Recorder (nPVR), and TSTV, and provides service authentication, authorization, and session resource management.

VOD server: The VOD server provides an interactive video service capability, mainly including playing VOD, TVOD, nPVR, and TSTV media streams requested by the user through streaming media, and meanwhile provides a live code stream recording function. The function is described as follows: when realizing a TVOD service, an nPVR service, or a TSTV service, the VOD server needs to receive a live program stream injected from a live television head end in real time, and records the program stream as a file, and when the user requests a TVOD program, an nPVR program, or a TSTV program subsequently, the VOD server plays the corresponding video media stream from the recorded file.

IP2ASI gateway: The IP2ASI gateway converts an on-demand control message encapsulated through IP into an ASI signal, and delivers the ASI signal to an STB through broadcasting over a unidirectional HFC network. The on-demand control message realizes two functions, namely, notifying the STB of switching to a specified frequency point to receive the demanded code stream, and notifying the STB of exiting an on-demand state and switching back to a live channel.

EPG server: The EPG server provides a bidirectional program guide browsing function, and receives and forwards an on-demand control request from a bidirectional STB or a handset device. The handset device refers to a General Packet Radio Service (GPRS)/Wideband Code Division Multiple Access (WCDMA)/Worldwide Interoperability for Microwave Access (WiMax)/CDMA IX mobile phone terminal with an IP access function or a handset device with a Wireless Fidelity (WiFi) function connected to a home gateway based on the wireless access technology in the embodiments of the present invention. In the embodiments of the present invention, the EPG server may not only have an EPG page in HTTP mode, but also provide an EPG page in Wireless Markup Language (WML) mode, so as to support the handset device to browse the EPG page through a Wireless Application Protocol (WAP) browser and obtain a program guide.

As described above, the VOD system according to the embodiment of the present invention at least has the following functions.

The EPG server is adapted to receive a control request sent by a terminal device.

An STB obtaining entity is adapted to obtain an STB device corresponding to the terminal device that sends the control request.

The VOD server is adapted to control a media stream of the STB device obtained by the STB obtaining entity according to the control request received by the EPG server.

A corresponding-relationships storage entity is adapted to store relationships between terminal devices and STB devices, so that the STB obtaining entity obtains an STB device according to the terminal device that sends the control request.

Specifically, the functions of the STB obtaining entity and the corresponding-relationships storage entity may be configured on the BMS.

The EPG server further includes: an EPG page generating unit, adapted to provide an EPG page based on an HTTP mode or a WAP mode to the terminal device, so that the terminal device sends the control request by selecting a link on the EPG page.
(2) Unidirectional HFC: The unidirectional HFC is characterized by merely providing downlink channels, instead of uplink channels, and serves as video media stream delivering channels; the unidirectional HFC mainly includes a QAM, an IPQAM, a multiplexer, a scrambler, and the like. The IPQAM is adapted to convert an IP program stream input from the VOD to an ASI signal and output the ASI signal. The ASI signal and the live television signal are mixed and delivered to the STB through broadcasting over the HFC network.
(3) Mobile IP network and fixed IP network: The networks provide IP access for the handset device, and provide a bidirectional IP back-transmission channel for realizing EPG page browsing and on-demand control on the handset device.
(4) STB: The STB receives a demanded media stream over the unidirectional HFC broadcast network, which is the same as a conventional STB terminal supporting an MPEG2 decoding capability.
(5) Handset device: The handset device refers to a mobile phone terminal supporting the wireless technology such as GPRS/WCDMA/CDMA/WiMax, or a handset device supporting WiFi or WiMax. The user browses the program guide and performs on-demand control on the handset device. The handset device is described as follows.

The mobile phone terminal provides a mobile IP access function, and the radio access link may be based on the GPRS, WCDMA, CDMA, WiMax, or Time Division-Synchronization CDMA (TD-SCDMA) format. Different from the mobile phone terminal in the conventional art, a browser built in the mobile phone terminal according to the embodiment of the present invention or a client customized for the embodiment of the present invention is utilized to access the EPG page, perform on-demand interactive control, and control to send the demanded program code stream to the STB bound with the mobile phone based on the IP link.

The handset device supporting WiFi, for example, a WiFi phone or a Personal Digital Assistant (PDA), accesses the fixed IP network provided by a telecommunication operator through a home gateway of a home WiFi network, so as to establish a bidirectional IP channel with the VOD system, thereby realizing the EPG browsing, and on-demand control.

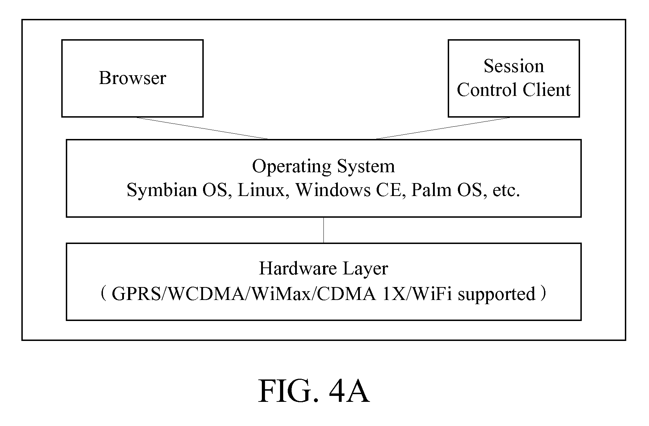

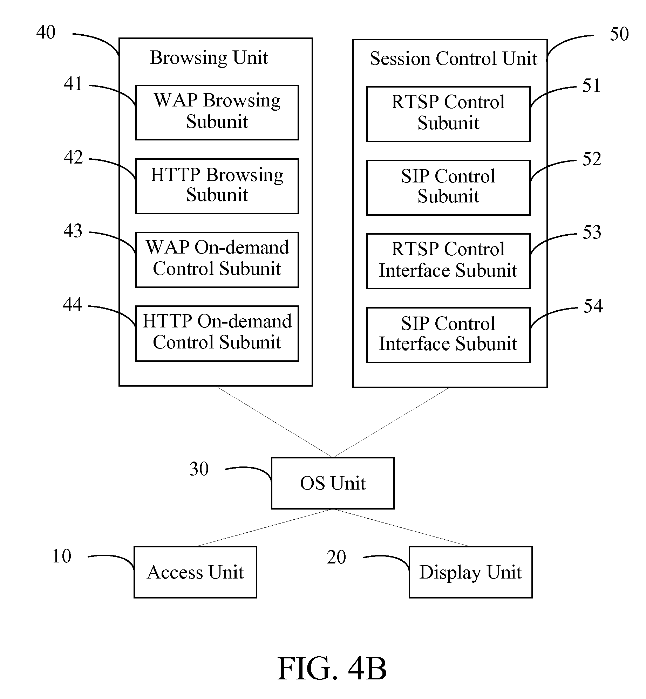

FIG. 4A and FIG. 4B show logic parts of the terminal device, which are described as follows.

Hardware layer: In the embodiment of the present invention, the hardware layer mainly includes an access unit 10 and a display unit 20, in which the access unit 10 provides a communication link connection with the VOD system, and supports GPRS/WCDMA/WiMax/CDMA 1X/WiFi connection modes; and the display unit 20 is a screen of the terminal device.

Handset device operating system (OS): In the embodiment of the present invention, the handset device OS is an OS unit 30, which is an embedded OS of the handset device, for example, Symbian OS, Linux, Windows CE, and Palm OS, and adapted to realize data exchange between the hardware layer and the browser in the device.

Browser: In the embodiment of the present invention, the browser is a browsing unit 40, which is an embedded browser supporting the WAP or HTTP protocol, for example, a currently universal mobile phone browser Opera. The browser unit 40 may further include a WAP browsing subunit 41 and an HTTP browsing subunit 42, which are mainly adapted to browse the EPG. In addition, when the VOD system supports the on-demand session control borne by the WAP and/or HTTP protocol, the browser unit 40 may further include a WAP on-demand control subunit 43 and/or an HTTP on-demand control subunit 44, which are adapted to directly perform the on-demand control in the browser through the WAP and/or HTTP protocol.

Session control client: In the embodiment of the present invention, the browser is a session control unit 50, which provides an on-demand session control function in Real-Time Streaming Protocol (RTSP)/Session Initiation Protocol (SIP) mode. The session control unit 50 further includes an RTSP control subunit 51 and a SIP control subunit 52, which are adapted to provide an RTSP-based on-demand session control function and a SIP-based on-demand session control function respectively. In addition, the session control unit 50 may further include an RTSP control interface subunit 53 and a SIP control interface subunit 54, which are adapted to provide interfaces based on RTSP control and SIP control respectively, so that the user can directly perform the on-demand control on the interfaces.

In the system and the device according to the embodiments of the present invention, through the interaction between the terminal device and the VOD system, the program guide browsing and on-demand control for the interactive video service are realized for STB users. Therefore, without significantly modifying the broadcast and television network, the present invention solves the problem that a great number of STB users cannot use the interactive video service. In addition, different from the on-demand mode through the SMS, telephone, or PC in the conventional art, the users may perform operations such as program guide browsing, on-demand initiating, and on-demand session control on handset devices, so that the present invention achieves desirable service experience.

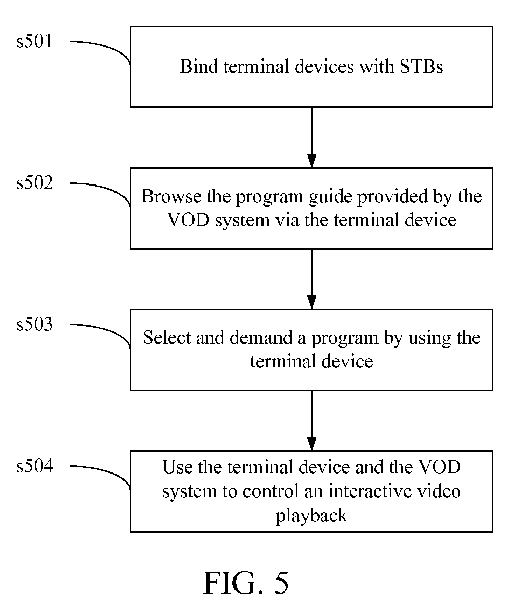

In an embodiment, the present invention provides a method for controlling an interactive video service, which enables a user to use the interactive video service through a terminal device. FIG. 5 is a flow chart of the method for controlling an interactive video service. As shown in FIG. 5, the method includes the following steps:
In step s501, terminal devices are bound with STBs.

Specifically, users may bind STBs with terminal devices at a business hall or on a self-service website. The binding operation aims at enabling the VOD system to associate the terminal devices with the STBs. After the binding operation is completed, the VOD system establishes relationships between identifiers of the terminal devices and identifiers of the STBs (for example, STB IC cards or STB IDs), and records the binding relationships in a database. Subsequently, when a user requests an on-demand service through a terminal device, after receiving an on-demand request from the specific terminal device, the VOD system identifies the STB user who requests the on-demand service according to the binding relationships stored locally, so as to broadcast the code stream to the corresponding STB. In implementation, the identifiers of terminal devices may be number identifiers assigned to the devices by a network operator, for example, mobile phone numbers.

In step s502, a program guide provided by the VOD system is browsed via the terminal device.

The user accesses an EPG server of the VOD system through a browser built in the terminal device or a protocol client customized for the interactive video service and installed on the terminal device (for example, an RTSP client or a SIP client). The EPG server returns an EPG page compiled with WAP labels (WML) or HTTP labels (HTML) according to the capability of the browser or client of the handset device. The user selects to browse the desired page by using keys or a touch module of the terminal device until the demanded program is found.

In step s503, a program is selected and demanded by using the terminal device.

After finding out the program to be demanded, the user selects an on-demand button or link provided on the page to initiate an on-demand request to the VOD system, and establishes an on-demand session. After receiving the on-demand request, the VOD system performs necessary service authentication, authorization, and on-demand resource allocation, generates a code stream delivery channel notification message, and broadcasts the message to the STB corresponding to the terminal device over an HFC network, so as to notify the STB of switching to a specific frequency point and preparing to receive the code stream. Meanwhile, the VOD system delivers the code stream to the HFC network, and the HFC network broadcasts and delivers the code stream at the frequency point where the STB is notified of preparing to receive the code stream.

In step s504, the terminal device and the VOD system are used to control an interactive video playback.

When watching the program, the user may use the terminal device to perform trick mode operations on the program at any time, such as fast forward, fast rewind, pause, and stop.

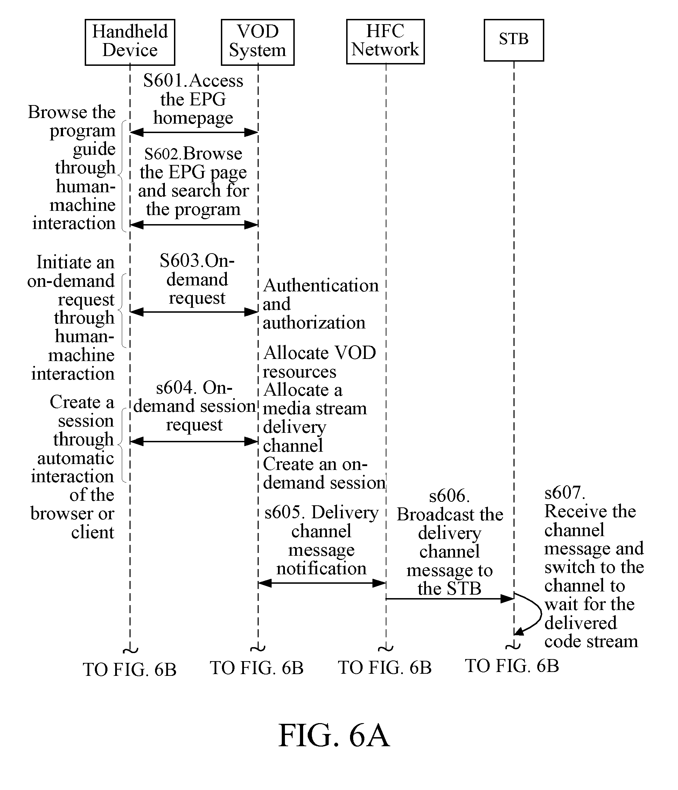

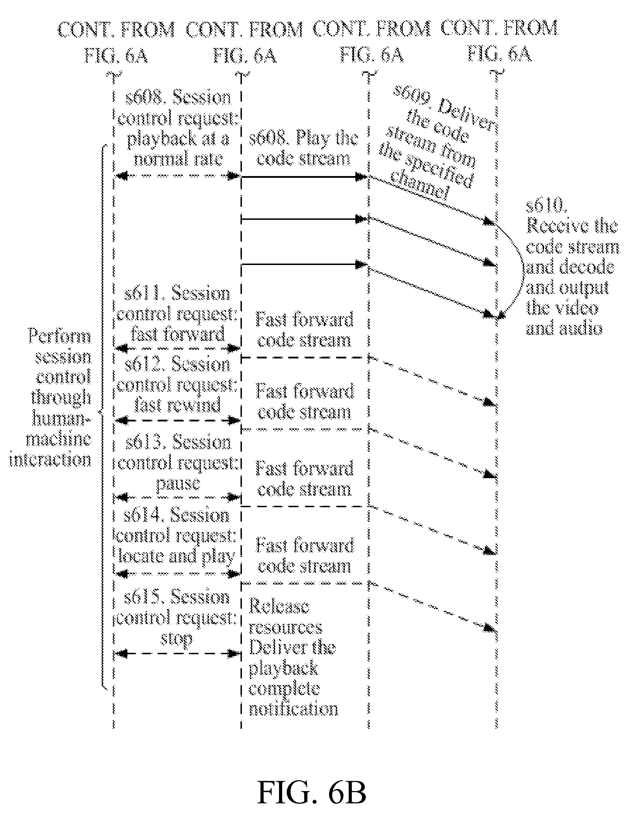

Specifically, in the embodiment of the present invention, the process for controlling the interactive video playback is described in further detail with reference to the signaling flow chart, in which the terminal device is, for example, a handset device. As shown in FIG. 6, the process for controlling an interactive video service includes the following steps:

In step s601, the user accesses an EPG website of the operator through a browser or a customized interactive video service client installed on the handset device, and enters an EPG homepage. The EPG homepage may be browsed in WAP or HTTP mode, which is determined depending upon the mode supported by the handset device.

In step s602, the user browses the EPG through links provided on the EPG homepage. The program guide includes a VOD program guide, a TVOD program guide, or an nPVR program guide, and the interface for browsing the program guide may be based on the WAP or HTTP. The user finds out the program to be demanded by browsing the program guide.

In step s603, after finding out the on-demand program guide, the user clicks a URL or on-demand button on the page. The URL or button is directed to a service program entry for processing the on-demand request by the VOD system, which is generally a specific common gateway interface (CGI) program provided by the EPG. In actual implementation, the program includes, but not limited to, a JSP page, a Servlet page, or an ASP page. When the service program processes the request, necessary service authentication is performed first, so as to ensure that legal and authorized users may perform the on-demand and interaction subsequently.

In step s604, after the request successfully passes the authentication and authorization, the VOD system redirects the on-demand request to a URL entry for session service as an on-demand request response , for example, the code of the on-demand request response is 3XX series, and the URL for session service is provided in the response. The URL may be an HTTP URL, a WAP URL, an RTSP URL, a SIP URL, and so on. After receiving the URL, the browser activates the client of the corresponding protocol according to the type of the URL to perform session interaction. For example, if the URL is the HTTP URL, the session interaction is still performed in the browser; if the URL is the RTSP URL, the client of the RTSP protocol is activated to perform the session interaction. When processing a session establishment request, the VOD system allocates VOD resources, and allocates the media stream delivery channel, which is mainly a delivery channel of the HFC network. The delivery channel of the HFC network includes two parts, one part is a port for the HFC network to receive the media stream broadcasted by the VOD from a GE network port, and the other part is the frequency point and ServiceID for broadcasting the ASI signal to the STB after the media stream is converted to the ASI signal.

In step s605, the VOD system notifies an HFC network device of the media stream delivery channel information ,for example, the channel information may include frequency point and ServiceID, through an interface provided by the HFC network device which is generally an Ethernet port, and requests the HFC network device to broadcast the channel information to the corresponding STB through a message, which carries the identifier of the STB for receiving the channel information. The VOD system finds out the identifier of the STB according to the binding relationships between handset devices and STBs.

In step s606, after receiving a delivery channel information notification from the VOD system, the HFC network device encapsulates the channel notification message in the broadcast code stream (generally a PSI/SI table of DVB) and broadcasts the channel notification message to the STB.

In step s607, the STB ensures that the channel notification message sent to the STB itself is received and processed through a filter mechanism. Specifically, the condition filtering may be performed by taking the identifier of the STB in the message packet and the identifier of the STB itself as the filter condition. When receiving the channel notification message, the STB adjusts a high frequency connector according to the frequency point and ServiceID carried in the message, so as to switch to the frequency point to receive the program code stream of the specified ServiceID.

In step s608, after the on-demand session is established through the above steps, the client enters a code stream playback stage at a normal rate according to a protocol automatic trigger mechanism (which is applicable generally when being supported by a standard session protocol process, and the session protocol is, for example, RTSP or SIP), or the VOD system plays the code stream when the session is established according to a default agreed logic (which is applicable when not being supported by a standard session protocol, and for example, the session is controlled by the WAP or HTTP protocol).

In step s609, after receiving the program code stream sent by the VOD at a specific port, according to the configuration relationship between ingress and egress ports, the HFC network device converts the received code stream into an ASI signal, broadcasts the ASI signal at a specified frequency point, and delivers the ASI signal to the STB.

In step s610, after receiving the broadcasted program code stream with the ServiceID at the frequency point, the STB decodes and plays the audio and video signals. Thus, the user can watch the demanded program code stream through the STB instead of through a screen of the handset device terminal.

In step s611, when watching the demanded program, the user can fast forward the program through the handset device.

In step s612, when watching the demanded program, the user can fast rewind the program through the handset device.

In step s613, when watching the demanded program, the user can pause the program through the handset device.

In step s614, when watching the demanded program, the user can locate and play the program through the handset device.

In step s615, when watching the demanded program, the user can stop the program on-demand operation through the handset device.

The operations of fast forwarding, fast rewinding, pausing, locating and playing, and stopping the program described in steps s611-s615 can be implemented by referring to the processes in steps s601-s609. The details are not described again here. To sum up, the user browses the EPG interface via the handset device, and selects the desired operation on the EPG page through links provided by the EPG homepage, and then, according to the operation selected by the user, the VOD system controls the media stream delivered to the user side STB over the HFC. Thus, the user may receive on the STB the operation result corresponding to the operation request sent by the handset device.

In the method according to the embodiments of the present invention, through the interaction between the terminal device and the VOD system, the program guide browsing and on-demand control for the interactive video service are realized for STB users. Therefore, without significantly modifying the broadcast and television network, the present invention solves the problem that some STB users cannot use the interactive video service. In addition, different from the on-demand mode through the SMS, telephone, or PC in the conventional art, the users may perform operations such as program guide browsing, on-demand initiating, and on-demand session control on handset devices, so that the present invention achieves desirable service experience.

Through the above description of the implementations, it is clear to persons skilled in the art that, the present invention may be accomplished through hardware, or through software together with a necessary universal hardware platform. Thus, the technical solutions of the present invention may be embodied in the form of a software product. The software product may be stored in a nonvolatile storage medium (for example, CD-ROM, USB flash drive, or removable hard disk) and contain several instructions adapted to instruct computer equipment (for example, a personal computer, a server, or network equipment) to perform the method according to the embodiments of the present invention.

To sum up, the above embodiments are merely exemplary embodiments of the present invention, but no intended to limit the protection scope of the present invention. It is apparent to persons skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for controlling an interactive video service, comprising:
receiving a control request sent by a terminal device;
obtaining an identifier of a Set Top Box ,STB, device corresponding to the terminal device; and
controlling a media stream of the STB device corresponding to the identifier of the STB device according to the control request.

2. The method for controlling an interactive video service according to claim 1, wherein before the receiving the control request sent by the terminal device, the method further comprises:
obtaining and storing relationships between identifiers of terminal devices and identifiers of STB devices;
wherein the obtaining the identifier of the STB device corresponding to the terminal device further comprises:
obtaining an identifier of the terminal device; and
obtaining the identifier of the STB device corresponding to the identifier of the terminal device according to the relationships between the identifiers of the terminal devices and the identifiers of the STB devices, so as to obtain the STB device corresponding to the terminal device.

3. The method for controlling an interactive video service according to claim 1, wherein the controlling the media stream of the STB device according to the control request further comprises:
when the control request is an on-demand request, redirecting the on-demand request to a session service entry of the terminal device, wherein the redirected message carries a link to a session service, so as to enable the terminal device to activate a client of a protocol according to a type of the link for performing subsequent session interaction; and
delivering a media stream of the on-demand request to the STB device over a network.

4. The method for controlling an interactive video service according to claim 1, wherein the controlling the media stream of the STB device according to the control request further comprises:
controlling the media stream sent to the STB device according to the control request, when the control request is any one of the following operations: fast forwarding, fast rewinding, pausing, locating and playing, stopping, and playing.

5. A system for controlling an interactive video service, comprising:
a Video On Demand ,VOD, system, adapted to receive a control request sent by a terminal device, obtain an identifier of a Set Top Box ,STB, device corresponding to the terminal device, and control a media stream of the STB device according to the control request; and
an STB device, adapted to receive a media stream sent by the VOD system according to the control request sent by the terminal device.

6. The system for controlling an interactive video service according to claim 5, wherein the VOD system comprises:
an Electronic Program Guide ,EPG, server, adapted to receive the control request sent by the terminal device;
an STB obtaining entity, adapted to obtain an STB device corresponding to the terminal device that sends the control request; and
a VOD server, adapted to control a media stream of the STB device obtained by the STB obtaining entity, according to the control request received by the EPG server.

7. The system for controlling an interactive video service according to claim 5, wherein the STB device and the terminal device are bound in advance.

8. A terminal device, adapted to control an interactive video service, comprising:
a browsing unit, adapted to browse an Electronic Program Guide ,EPG, page provided by a Video on Demand ,VOD, system on a network side, and send a control request to the VOD system by selecting a link on the EPG page; and
a session control unit, adapted to send to the VOD system a control request for a media stream currently received by a Set Top Box ,STB, device.

9. The terminal device according to claim 8, wherein the browsing unit further comprises:
a Wireless Application Protocol ,WAP, on-demand control subunit, adapted to directly send the control request to the VOD system in a browser when the VOD system supports on-demand session control in WAP mode; and
a Hypertext Transfer Protocol ,HTTP, on-demand control subunit, adapted to directly send the control request to the VOD system in a browser when the VOD system supports on-demand session control in HTTP mode.

10. The terminal device according to claim 8, wherein the session control unit further comprises:
a Real-Time Streaming Protocol ,RTSP, control subunit, adapted to provide an RTSP-based on-demand session control function; and
a Session Initiation Protocol ,SIP, control subunit, adapted to provide a SIP-based on-demand session control function.

11. The terminal device according to claim 8, wherein the session control unit further comprises:
an RTSP control interface subunit, adapted to provide an interface based on RTSP control for sending the control request to the VOD system; and
a SIP control interface subunit, adapted to provide an interface based on SIP control for sending the control request to the VOD system.

12. A Video On Demand , VOD, system, comprising:
an Electronic Program Guide ,EPG, server, adapted to receive a control request sent by a terminal device;
a Set Top Box ,STB, obtaining entity, adapted to obtain an identifier of an STB device corresponding to the terminal device that sends the control request; and
a VOD server, adapted to control a media stream of the STB device obtained by the STB obtaining entity, according to the control request received by the EPG server.

13. The VOD system according to claim 12, further comprising:
a corresponding-relationships storage entity, adapted to store relationships between terminal devices and STB devices, so that the STB obtaining entity obtains an identifier of an STB device according to the terminal device that sends the control request and further obtains the STB device corresponding to the identifier.

14. The VOD system according to claim 12, wherein the EPG server further comprises:
an EPG page generating unit, adapted to provide an EPG page based on a Hypertext Transfer Protocol ,HTTP, mode or a Wireless Application Protocol ,WAP, mode to the terminal device, so that the terminal device sends the control request by selecting a link on the EPG page.

15. An Electronic Program Guide , EPG, server, comprising:
an EPG page generating unit, adapted to provide an EPG page based on a Hypertext Transfer Protocol ,HTTP, mode or a Wireless Application Protocol ,WAP, mode to a terminal device, so that the terminal device sends a control request by selecting a link on the EPG page; and
a receiving unit, adapted to receive the control request sent by the terminal device according to the EPG page provided by the EPG page generating unit.
